# EUROPEAN PATENT APPLICATION

(11) **EP 1 689 138 A1**
(43) Date of publication of application: **09.08.2006**
(21) Application number: 06380016.3
(22) Date of filing: 19.01.2006
(51) Int. Cl.: H04L 12/58

(54) **Method and interface for filtering SMS and MMS messages**

(30) Priority: 08.02.2005 ES 200500251
(71) Applicant: Vodafone Group PLC, Newbury Berkshire RG14 2FN (GB); Vodafone Espana, S.A., 28108 Alcobendas, Madrid (ES)
(72) Inventor: Ochoa Giménez, Susana, 28037 Madrid (ES); del Ser Bartolomé, David, 28005 Madrid (ES); Almenar Belenguer, Pedro, 28020 Madrid (ES)
(74) Representative: Carvajal y Urquijo, Isabel

(57) **Abstract**

The present invention refers to a mobile telephony method and interface for requesting a server 10 of a mobile communications network 1 to execute at least one action from a set of predetermined actions on the contents and sender 30 of SMS and MMS messages received in a mobile terminal 20.

The method comprises sending to said server:
- first data with information relative to the contents of said message M, and further sending to said server:
- second data with information relative to said action to be carried out by the operator on said message M, and/or
- third data with information relative to an identifier of a sender of said message M.

## Description

### Field of the Invention

The invention is included in the mobile telecommunications field, and more specifically in the information contained in and received via SMS text or MMS multimedia messages.

### Background of the Invention

Mobile phones are becoming the latest target of junk e-mails, and even though spam (unwanted messages) in mobile phones has not yet reached the volume in e-mails, the problem is increasing.

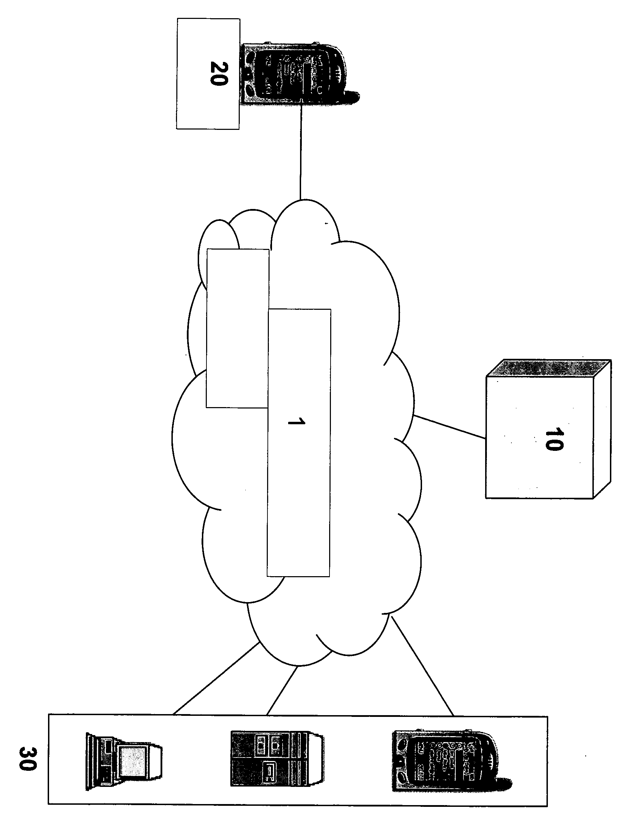

The SMS or MMS messages that the user receives may be broadcasted from different origins (mobile phone, server, PC), but always reach the final user via a mobile network (see Figure 1), which could provide an anti-spam system.

There are different anti-spam techniques in the internet world that may be adapted to mobile networks: a word filter, blacklists, heuristic filter..., but the best way of finding out if a message is spam or not is knowing the opinion that the user himself having received the message has of said message and learning from his opinions/ratings.

That is, it is important that the anti-spam system can learn from the message ratings made by the user himself.

This function is provided, for example, to the users of e-mail accounts such as Yahoo Mail™ and Hotmail™; in these cases, the users have to access their accounts via a PC computer or similar, and once they have accessed the corresponding page, they classify an e-mail as spam or include a mail address in their blacklist, providing the e-mail server with information on how to manage their mails.

In this prior art, a user is provided with a web interface for filtering the sender of a message and classifying it in white or blacklists.

In order to adapt these techniques to the mobile world, the most automatic thing would be to generate a web interface for the mobile user where his profile of wanted and unwanted SMS or MMS messages (white and blacklists, adult content selection...) could be configured. However, this solution uses fixed user interfaces based on web pages with the resulting need for at least a basic knowledge of internet-associated tools.

It is a fact that there are many mobile telephony users that do not have knowledge of and/or access to internet based interfaces (they do not have a computer, or an account for internet access, or just the knowledge on how to do it), so currently this type of users would not have the ability, for example, to classify the sender of a message received in his mobile phone as unwanted or undesirable.

On the other hand, this option is not currently possible in mobile phones. At present, user X1 is enabled to forward a message received in his mobile phone (e.g. an unwanted message with contents Y from a sender X2), but when sending it to another user or an operator, only the contents Y of said message are sent, not the original sender X2 of said message, so the anti-spam system will not be capable of learning that said sender X2 is, for example, "unwanted".

PCT patent application published WO 02/071774 relates to systems and methods for preventing the delivery of unwanted short messages to a user in a mobile communications network. More specifically, the method and system disclosed in this document relate to methods and systems for intercepting and rejecting unwanted SMS messages in an SMS message path allocation node, thus preventing the delivery of said unwanted SMS message to the user. However, this patent does not envisage the possibility that the user sends the contents of the received unwanted message (for the system to learn from it), but only contemplates the notification of the recipient that is sending unwanted messages.

A glossary of terms which are used throughout the present specification is shown below:

| | |
|---|---|
| MMS | Multimedia Message Service |
| MS | Mobile Station |
| SMS | Short Message Service |
| URL | Uniform Resource Locator |
| WS | Web Services |
| XML | Extensible Markup Language |

### Description of the Invention

It is an object of the present invention to provide a mobile telephony interface and method enabling the user of a mobile terminal to request the mobile network to execute actions on the contents and sender or only on the contents of SMS and MMS messages received in his mobile terminal.

In accordance with an aspect of the present invention, the latter relates to a method for requesting a server of a mobile communications network to execute at least one action from a set of predetermined actions on a message M received in a mobile terminal, which message M has contents and a sender, the method comprising sending to said operator:
- first data with information relative to the contents of said message M.

The method further comprises sending to said operator:
- second data with information relative to said action to be carried out by the operator on said message M, and/or
- third data with information relative to an identifier of a sender of said message M.

The method preferably comprises generating a message including said first, second, and/or third data. Said generated message may be composed by the user of the mobile terminal. Or said message may be generated by an application residing in the mobile terminal, transparently to the user, without the latter needing to key in the message; in this case, the user does not need to know in which way the information is delivered to the network server (he does not have to know the phone number or URL the information is sent to).

Said generated message may be an SMS message (in the case the received message M is an SMS message), or an MMS message (both if the received message M is an MMS message or an SMS message), or a message coded in XML (for either a received MMS or SMS message M).

Said first data with information relative to the contents of said message M may be the message itself (text in the case of SMS, and text, audio, video or images in the case of MMS) or may be relevant information of said message extracted and compressed prior to being sent to the network operator.

Said set of predetermined actions which the network must execute on the received information may be, for example:
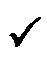 blocking the sender (including him in a blacklist);
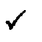 learning from the contents of the message; thus, if it is a spam message, for example, blocking subsequent messages with similar contents;
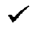 sending a "reception error" message to the sender.

Said second data with information relative to said action may be a code associated to each action within the set of predetermined actions.

This code enables to extend the present invention to diverse applications independent from the anti-spam service.

Third data with information relative to an identifier of a sender of said message M may be, for example, a phone number or a URL address.

In accordance with another aspect of the present invention, the latter relates to a mobile telephony interface for requesting a server of a mobile communications network to execute at least one action from a set of predetermined actions on a message M received in a mobile terminal, the message M of which has contents and a sender; the interface comprises:
- means of sending of first data with information relative to the contents of said message M,
   and further comprises:

- means of sending of second data with information relative to said at least one action to be carried out by the operator on said message M, and/or
- means of sending of third data with information relative to an identifier of a sender of said message M.

### Brief Description of the Drawings

Described below is a drawing aiding to better understand the invention and which is specifically related to an embodiment of said invention, shown as a nonlimiting example of the latter.

Figure 1 schematically shows some elements of the mobile network, with the server from which actions on the contents and sender or only the contents of SMS and MMS messages are requested.

### Description of a Preferred Embodiment of the Invention

Communication between the mobile terminal 20 and the mobile network 1 of the operator may be based on different, currently existing messaging transport services.

Nevertheless, the different services have to allow the mobile terminal user to send, via his mobile terminal, the following information to the operation:
- the contents of the received message M;
- an identifier of the sender 30 (phone number or URL);
- a code indicating the action requested from the operator.

Next, three communication methods are described wherein the existence of a server 10 in mobile network 1 of the operator capable of receiving the messages and acting accordingly, depending on how is the action requested by means thereof, is assumed.

### 1. Sending of SMS messages

One possible way of communication between the mobile terminal 20 which has received a message M and the server 10 associated to the mobile network 1 is the sending of an SMS message. In this case, the information to be sent (previously described) is included within the "TP-User Data" field of the SMS message SUBMIT.

### 2. Sending of MMS messages

In the case of wanting to request some action on an MMS multimedia message received by the user of mobile terminal 20, the communication between the terminal and the server may be carried out by means of the sending of an MMS message.

In this case, the contents of the received message would be kept in the same format (audio, video or images), and the other two information fields (the identifier of the sender, and the code for the action) would be added in the "Plain Text" format of the same multimedia message.

### 3. Sending via Web Services

The communication by means of Web Services WS may be carried out both in the case of an SMS message and in the case of an MMS message. A message is built coded in XML including the three aforementioned fields. In the case of an SMS message, the Contents field only contains text, whilst in the case of an MMS message, it can further hold multimedia contents.

Once the XML message has been composed, a connection with a server of the operator is established and the message is transmitted together with the authentication and security information necessary according to the implementation.

Next, a simple example of the possible XML contents is included for the case of an SMS message, wherefrom the security and authentication information has been removed.
<?xml version = "1.0" encoding = "utf-8" ?>
<ActionRequest>
<Contents>

Good morning! We are pleased to inform you that you are the winner of an apartment in Marbella. Call 806 666 666 so that we can explain you how to get the keys.
</Contents>
<Sender>
6666
</Sender>
<ActionCode>
BlockShortNumber
</ActionCode>
</ActionRequest>

In any of the foregoing cases, and in the specific case of receiving an unwanted message (spam), the mobile terminal user may have several ways of interacting with the system so as to notify the reception of an unwanted message. For example:
■ he may select, by means of the "options" menu that appears upon display of an SMS or MMS message, the "Spam" option (the user would indicate the operation he desires to perform on the selected message from the message inbox);
■ he may access a "Spam" option from the main menu which interacts with the SMS/MMS message inbox (the user accesses the "Spam" application in his mobile terminal and it allows him to select in one of its steps the message/s on which he wants to apply the specific action).
In the case of receiving a not necessarily unwanted message (spam):
■ there may exist any other option in the mobile terminal allowing the user to request the operator a specific action on said SMS or MMS message received on his terminal.

The previously described communication between the mobile terminal 20 and the server 10 takes place such that:
■ the user does not have to key in the target number (it may be predetermined),
■ it may be free of charge, or its rating may be different than for normal message sending ,
■ the user may receive an embedded notification indicating that the operation has been successfully carried out.

On reception of the notification message, the corresponding operator or server is capable of identifying the action to be carried out according to the received action code.

For example, in the case of notification of a spam message, the latter will be received by the anti-spam server of the mobile network, which:
■ learns from the contents of the message so as to update its anti-spam filters; and/or
■ modifies the user's blacklist in order to reject all messages received from that sender for the user.

Thereby, a user interface is provided to the mobile telephony user allowing him to request from the mobile network an action on an SMS or MMS message received in his terminal and/or on the sender of said message.

## Claims

1. A method for requesting a server (10) of a mobile communications network (1) to execute at least one action from a set of predetermined actions on a message M received in a mobile terminal (20), the message M of which has contents and a sender (30), the method comprising sending to said server (10):
- first data with information relative to the contents of said message M,
**characterized in that** it further comprises sending to said server (10):
- second data with information relative to said action to be carried out by the server (10) on said message M, and/or
- third data with information relative to an identifier of a sender (30) of said message M.

2. A method according to claim 1, **characterized in that** it further comprises generating a message including said first, second, and/or third data.

3. A method according to claim 2, **characterized in that** said message is generated by an application residing in the mobile terminal.

4. A method according to claim 2, **characterized in that** said message is composed by a user of the mobile terminal.

5. A method according to any of claims 2-4, **characterized in that** said generated message is an SMS message.

6. A method according to any of claims 2-4, **characterized in that** said generated message is an MMS message.

7. A method according to any of claims 2-4, **characterized in that** said generated message is a message coded in XML.

8. A method according to any of claims 1-7, **characterized in that** said received message M is a message from the SMS service.

9. A method according to any of claims 1-4 or 6-7, **characterized in that** said received message M is a message from the MMS service.

10. A method according to any of the previous claims, **characterized in that** said third data includes a phone number from the sender.

11. A method according to any of claims 1-9, **characterized in that** said third data includes a URL address.

12. A mobile telephony interface for requesting a server (10) of a mobile communications network (1) to execute at least one action from a set of predetermined actions on a message M received in a mobile terminal (20), the message M of which has contents and a sender (30); said interface comprises:
- means of sending of first data with information relative to the contents of said message M,
and further comprises:
- means of sending second data with information relative to said at least one action to be carried out by the server on said message M, and/or
- means of sending third data with information relative to an identifier of a sender of said message M,
such that said first, second, and third data are sent by the mobile terminal to said server.
